(19) Europäisches Patentamt
European Patent Office
Office européen des brevets

(11) **EP 2 472 875 A1**

(12) **EUROPEAN PATENT APPLICATION**

(43) Date of publication:
**04.07.2012 Bulletin 2012/27**

(51) Int Cl.:
***H04N 9/64*** *(2006.01)*

(21) Application number: **10306526.4**

(22) Date of filing: **28.12.2010**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | • **Bourdon, Pascal**<br>**92443, ISSY LES MOULINEAUX cedex (FR)**<br>• **Sacre, Jean-Jacques**<br>**92443, ISSY LES MOULINEAUX cedex (FR)** |
| (71) Applicant: **Thomson Licensing**<br>**92130 Issy-les-Moulineaux (FR)** | (74) Representative: **Ruellan-Lemonnier, Brigitte**<br>**Technicolor**<br>**European Patent Operations**<br>**1-5 Rue Jeanne d'Arc**<br>**92443 Issy-les-Moulineaux Cedex (FR)** |
| (72) Inventors:<br>• **Stauder, Jürgen**<br>**92443, ISSY LES MOULINEAUX cedex (FR)** | |

(54) **Control of a multiprimary display device for observers having different visual characteristics**

(57)    In the method according to the invention, the choice among Q different N-tuples for the control of the display device is performed for each pixel of an image to reproduce in order to minimize the difference of perceptions of the colour generated by the display device among the various observers.

Fig.2

EP 2 472 875 A1

**Description**

The invention relates to the control of multiprimary display devices for the reproduction of images that is optimized for a set of actual observers having different visual characteristics.

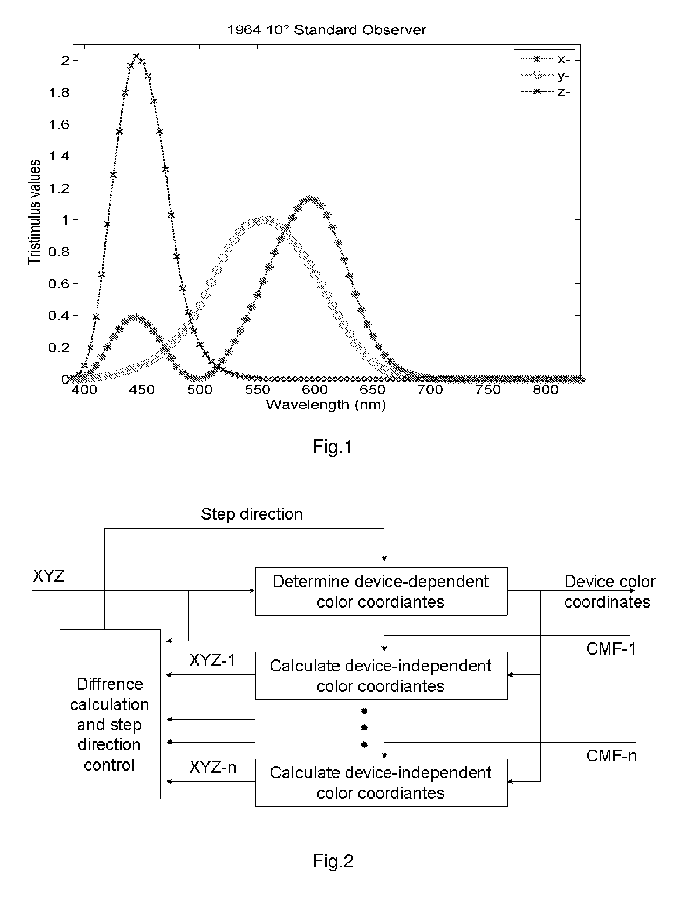

The colour matching functions are very well known as the numerical description of the chromatic response of the eyes of a human observer. The CIE has defined a set of three colour-matching functions ("CMF"), called $\bar{x}\lambda$, $\bar{y}\lambda$ and $\bar{z}\lambda$, which can be thought of as the response curves of the trichromatic human visual system based on its three linear light detectors that yield the tristimulus values X, Y, and Z in the CIE XYZ linear visual colour space. Two sets of standard observer CMFs are generally used, depending on the field of view : CIE-1964 10° or CIE-1931 2°. As illustrated on figure 1 for CIE-1964 10°, these three CMF functions are respectively for the long-, medium- and short-wavelength range.

According to basic colourimetry, the tristimulus values (X,Y,Z) as expressed in the standard CIE-XYZ colour space, of a colour of an object as perceived by a standard observer are obtained by the integration of the spectral power distribution of a standard light source ($S_\lambda$), the reflectance factor of the object ($R_\lambda$), and the colour matching functions of an average, standard observer ($\bar{x}\lambda$, $\bar{y}\lambda$ and $\bar{z}\lambda$). If k is a normalization factor that assigns the luminance of white an arbitrary value of 100, we have the following definitions :

$$X = k \sum_\lambda S_\lambda R_\lambda \bar{x}_\lambda \Delta\lambda; \quad Y = k \sum_\lambda S_\lambda R_\lambda \bar{y}_\lambda \Delta\lambda; \quad Z = k \sum_\lambda S_\lambda R_\lambda \bar{z}_\lambda \Delta\lambda$$

$$k = \frac{100}{\sum_\lambda S_\lambda \bar{y}_\lambda \Delta\lambda}$$

Since the tristimulus values (X,Y,Z) are computed by wavelength-wise integration, two colour tristimuli with very different spectral power distribution can give rise to identical visual response for a given observer, leading to a "metameric" colour match. This phenomenon is commonly termed as observer metamerism.

Conventional colour display devices generally relies on colourimetric data for a single "standard observer". Such colourimetric data represent only an average in terms of colour vision characteristics. Any real and normal observer can potentially have colourimetric characteristics (i.e. colour matching functions or "CMF") different from this standard observer, leading to a colour mismatch between the predicted (i.e. computed) and perceived colour under a given viewing condition dictated by the application context. This phenomenon of observer variability is also related to observer metamerism, where two colour stimuli that match for one observer under a given viewing condition do not match for another observer under the same conditions.

As an example of practical implication of observer metamerism, if two colour-normal and actual observers with different colour vision characteristics (given by their colour matching functions), are asked to evaluate colours on a modern wide-gamut display device, notably on a display device having narrowband ("peaky") primaries (and to a lesser extent, in case of a display with broadband primaries), they are likely to disagree on several colour perceptions, particularly in the cyan and blue regions of the colour space.

Colours are generally represented as a set of trichromatic colour values, for instance R, G and B in a RGB device-dependent colour space, or X, Y and Z in a linear CIE-XYZ visual colour space, or L, a, b in a non-linear visual perceptually-uniform CIE-LAB colour space. Instead of representing colours as a set of three colour values, it is well known to define colours as a set of data based on a multispectral representation : see the publication entitled "Aspects of total multispectral image reproduction systems" by Bernhard Hill (hill@ite.rwth-aachen.de), Department of Electrical Engineering and Information Technology, Aachen University of Technology. See also the publication entitled "Colour image reproduction based on the multispectral and multiprimary imaging", by Masahiro Yamaguchi et al., published in "Colour Imaging: Device Independent Colour, Colour Hardcopy and Applications VII", Proc. SPIE, Vol.4663, p.15-26 (2002). See also the publication entitled "Colour conversion method for multi-primary display for spectral colour reproduction" published in the Journal of Electronic Imaging 13(4), 701-708 (October 2004), by Murakami et al.

According to these publications, it is impossible to suppress the observer metamerism by using conventional three-primary displays, i.e. RGB-based displays. These publications also revealed that using multiprimary display would solve this problem, namely, the object and image can be observed as the same colour for the observers who have different sets of CMFs. For this purpose, it is required to apply multispectral image acquisition and the multiprimary display using multidimensional CMF or spectral basis for discounting the CMF variation.

The document EP1450302 (OLYMPUS) and the article entitled "A multiprimary display: Discounting observer metamerism", by Friedhelm König et al., disclosed during the 9th Congress of the International Colour Association and published in Proceedings of SPIE Vol. 4421 (2002), disclose a colour reproduction device capable of performing faithful colour reproduction for different observers having variations in colour matching functions. These documents describe a colour reproduction device using more than three primary colours. Additionally to a significant increase in device gamut, the use of more than three primary colours to reproduce colours introduces additional degrees of freedom for displaying a given colour. Therefore, such a reproduction device offers the choice of several possibilities to reproduce the same colour, i.e. to give the same colour perception for a given observer, whatever is the choice, i.e. to reproduce metameric colours. Among these several possibilities, these documents describe how a metameric colour actually reproduced should be chosen to be as close as possible to the original colour for a set of actual observers having different visual characteristics, or to be more specific, how "the effect of observer metamerism can be minimized by finding the control vector C that leads to a display observer vector $O_D$ that is as close as possible to the observer vector 0 of the original colour" (see at the middle of page 900 of the König's publication).

In such methods, the control of the colour reproduction device is adapted such that the reproduced spectrum of a colour is approximated to the original spectrum of this colour within the colour gamut of this reproduction device and as best realizable by this reproduction device.

It means practically that :

- the colours to reproduce are represented by a spectrum instead of trichromatic values;
- the colour reproduction device uses more than three primary colours, allowing the display of metameric colours;
- the display signals adapted to display a given colour are calculated such that the wavelength spectrum that is obtained using the combination of these primary colours is the closest possible ("best match") to the spectrum representing this given colour.

The advantage of this technique is that faithful colour reproduction can be performed for a large range of different real observers, whatever are their visual characteristics (or set of CMFs).

An aim of the invention is to propose another way to reach the same objective without using specific spectral data to represent the colours. Instead of selecting the display signals such that the displayed spectrum matches the best possible the spectrum representing this colour, it is proposed to select the display signals such that the difference of visual perception of this displayed spectrum is minimized for a given range of observers having different visual characteristics, i.e. characterized by different sets of CMFs.

For this purpose, the subject of the invention is a method for reproduction of a colour image for a given set of M actual observers $Ob_{j=1\_to\_M}$ by using a given set of N-primary colours $PC_{i=1\text{-to-}N}$ of an image reproduction device, wherein N > 3, and by applying, for each pixel of said colour image, an optimum intensity $(RC_i)_{OPT}$ to each primary colour $PC_i$ of said set, the optimum intensities of the different N-primary colours $PC_{i=1\text{-to-}N}$ forming an optimum N-tuple of device dependent colour coordinates $(RC_{1\_to\_N})_{OPT}$, where, whatever the Q different N-tuples of device dependent colour coordinates $(RC_{1\_to\_N})_{k=1\text{-to-}Q}$ that may be applied for the reproduction of the colour of any pixel of said image, said reproduction generating, for a given N-tuple $(RC_{1\_to\_N})_k$, a given perception $(T\text{-}Ob_j)_k$ of said reproduced colour for each observer $(Ob_{j=1\,to\,M})$ of said set, if the difference between the perception $(T\text{-}Ob_j)_k$ of said reproduced colour by a given observer $(Ob_j)$ of said set and the perception $(T\text{-}Ob_0)_k$ of the same reproduced colour by a reference observer $(Ob_0)$ is denoted $|(T\text{-}Ob_j)_k - (T\text{-}Ob_0)_k|$, if the sum of these differences over the whole set of observers $(Ob_{j=1\_to\_M})$ is denoted $\Sigma\Delta_k$, where $\Sigma\Delta_k = \Sigma_{j=1\,to\,M}|(T\text{-}Ob_j)_k - (T\text{-}Ob_0)_k|$, said optimum N-tuple of device dependent colour coordinates $(RC_{1\_to\_N})_{OPT}$ is chosen such that the corresponding sum $\Sigma\Delta_{OPT}$ of these differences is the minimum sum over all sums of these differences $\Sigma\Delta_{k=1\,to\,Q}$.

Preferably, Q > 100. More preferably, Q > 10000.

An object of the invention is also a method for reproduction of a colour image as described above, wherein the colour of each pixel of said image is described by a first triple of device-independent coordinates $(X_0,Y_0,Z_0)$ in a reference colour space for a reference observer $(Ob_0)$ who is visually characterized by a reference triple of colour matching functions $x_0(\lambda)$; $y_0(\lambda)$; $z_0(\lambda)$, wherein each actual observer $(Ob_{j=1\_to\_M})$ of said given set is visually characterized by a triple of colour matching functions $x_j(\lambda)$; $y_j(\lambda)$; $z_j(\lambda)$, where, for each pixel of said image:

- the Q different N-tuples of device-dependent colour coordinates $(RC_{1\_to\_N})_{k=1\_to\_Q}$ are determined to be adapted to reproduce the colour of said pixel as defined by its first triple of device-independent coordinates $(X_0,Y_0,Z_0)$;
- for each N-tuple of device-dependent colour coordinates $(RC_{1\_to\_N})_{k=1\_to\_Q}$:
- for each actual observer $(Ob_{j=1\_to\_M})$ of said set, a triple of device-independent coordinates $(X_{kj},Y_{kj},Z_{kj})$ is calculated in said reference color space such that, if $SPD_k$ is the spectral power distribution that is obtained by applying the device-dependent colour coordinates of said N-tuple of $(RC_{1\_to\_N})_k$ to each corresponding primary colour $(PC_{i=1\text{-to-}N})$, and if $x_j(\lambda)$; $y_j(\lambda)$; $z_j(\lambda)$ is the triple of colour matching functions of said actual observer $(Ob_j)$:

$$X_{kj} = \sum_{\lambda} SPD_k x_j(\lambda)\Delta\lambda; \quad Y_{kj} = \sum_{\lambda} SPD_k y_j(\lambda)\Delta\lambda; \quad Z_{kj} = \sum_{\lambda} SPD_k z_j(\lambda)\Delta\lambda$$

- for each actual observer ($Ob_{j=1\_to\_M}$) of said set, the difference between the calculated triple of device-independent colour coordinates ($X_{kj}, Y_{kj}, Z_{kj}$) for this actual observer and said first triple of device-independent colour coordinates ($X_0, Y_0, Z_0$) for the reference observer ($Ob_0$) is calculated, and
- the sum $\Sigma\Delta_k$ of these differences over all actual observers ($Ob_{j=1\_to\_M}$) of said set is calculated;
- said optimum N-tuple of device dependent colour coordinates ($RC_{1\_to\_N}$)$_{OPT}$ is then chosen such that the corresponding sum $\Sigma\Delta_{OPT}$ of these differences is the minimum sum over all sums of differences $\Sigma\Delta_{k=1\ to\ Q}$.

As a whole, in the method according to the invention, the choice among Q different N-tuples for the control of the display device is performed for each pixel of an image to reproduce in order to minimize the difference of perceptions of the colour generated by the display device among the various observers.

Advantageously and contrary to the prior art method referenced above, the colours to reproduce do not need to be represented by a spectrum instead of trichromatic values. The invention allows to account for observer metamerism by displaying the colour in such a way that the colour differences are minimal for every observer of the reproduced colour.

The image reproduction device may be a display device such as a LCD, an OLED display, a plasma display, or may be an image colour printer, or any other image reproduction device.

The determination of the N-tuple of device-dependent colour coordinates that are adapted to reproduce a given colour as defined by its first triple of device-independent coordinates is performed in a manner known per se as described for instance in the document US6648475, WO01/95544, US6256073, US6191826 et US6147720 in which a multiprimary display device is implemented.

The reference colour space is, for instance the CIE-XYZ color space, the Lab color space, or a standard RGB color space.

The invention will be more clearly understood on reading the description which follows, given by way of non-limiting example and with reference to the appended figures in which:

- Figure 1 illustrates a set of CMFs of a standard observer;
- Figure 2 is a diagram illustrating one embodiment of the invention.

Any flow charts, flow diagrams, and the like represent various processes which may be substantially represented in computer readable media and so executed by a computer or processor, whether or not such computer or processor is explicitly shown. The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared.

An image display device adapted to implement the method of reproduction of colour images according to the invention will now be described. This image display device is one of those having more than three primary colours as described for instance in the already quoted document EP1450302 (OLYMPUS) or in the already quoted article entitled "A multiprimary display: Discounting observer metamerism", by Friedhelm König. Each primary colour $PC_{i=1\_to\_N}$ is characterized by its wavelength spectral distribution $SP(\lambda)_{i=1\_to\_N}$. Such an image display device is very well known in the art and will not be described in detail. To reproduce an image, each pixel of such an image display device is controlled by a N-tuple of device-dependent colour coordinates ($RC_{i=1\_to\_N}$), wherein each device-dependent colour coordinate $RC_i$ of this N-tuple corresponds to the intensity of the corresponding primary $PC_i$ that is used reproduce this pixel.

Colour images to reproduce are generally provided in standardized format as, for instance, ITU-R BT.709, such that the colours associated with each pixel of such images are expressed, for instance, in the YUV colour space, from which they may be converted, in a manner known per se, in a linear device-dependent RGB colour space and then in the linear device-independent CIE XYZ colour space.

For an observer, the device independent colour coordinates in the CIE-XYZ reference colour space can be interpreted as the input signal to an imaginative reference display having primaries according to the CIE-XYZ reference colour space. The reproduced spectrum of this imaginative reference display responding to this input signal generates the same colour perception as the spectrum of the multi-spectral display.

In summary, each pixel $P_x$ of an image can be represented by a trichromatic stimulus ($X_0, Y_0, Z_0$)$_x$ which corresponds to the perception of the colour of this pixel by a CIE standard observer $Ob_0$. A wavelength-wise spectral power distribution $(SPD)_x$ can be associated with this trichromatic stimulus ($X_0, Y_0, Z_0$)$_x$ such that the following relations are met :

$$X_0 = \sum SPD_x x_0(\lambda)\Delta\lambda; \quad Y_0 = \sum SPD_x y_0(\lambda)\Delta\lambda; \quad Z_0 = \sum SPD_x z_0(\lambda)\Delta\lambda \text{ where}$$

$x_0(\lambda)$; $y_0(\lambda)$; $z_0(\lambda)$ is the set of CMFs visually characterizing the standard observer.

The determination of any N-tuple of device-dependent colour coordinates $(RC_{1\_to\_N})_k$ that is adapted to reproduce the colour of a pixel $P_x$ as defined by its first triple of device-independent coordinates $(X_0,Y_0,Z_0)_x$ is performed in a manner known per se as described for instance in the document US6648475, WO01/95544, US6256073, US6191826 et US6147720 in which a multiprimary display device is implemented.

In order to reproduce the colour of any pixel of an image, the image reproduction device is controlled by inputting a N-tuple of device dependent colour coordinates $(RC_{1\_to\_N})$, each component of this N-tuple being proportional to the intensity of one primary color that is used to reproduce this color.

A given set of M actual observers $Ob_{j=1\_to\_M}$ is defined, where each observer $Ob_j$ is visually characterized by a triple of colour matching functions $x_j(\lambda)$; $y_j(\lambda)$; $z_j(\lambda)$.

Figure 2 shows a diagram illustrating the method according to the invention. From incoming device-independent colour coordinates $(X_0,Y_0,Z_0)$ representing an original colour of a pixel to reproduce in a CIE-XYZ reference colour space, a set of Q different N-tuples of device-dependent colour coordinates $(RC_{1\_to\_N})_{k=1\_to\_Q}$ are determined that are all adapted to reproduce this colour using the colour reproduction device.

To determine this set of Q different N-tuples of device-dependent colour coordinates $(RC_{1\_to\_N})_{k=1\_to\_Q}$, one of the following methods can be used:

1. Blind, batch calculation: The Q different N-tuples of device-dependent colour coordinates are generated by random sampling in the colour space. Each time, N-tuples of device-dependent colour coordinates are generated , it is verified that they are all adapted to reproduce this colour. If not, new colour coordinates are generated. Preferably, Q is chosen superior to 10000.

2. Optimized, sequential calculation, in which case Q is preferably superior to 100 : in this case, the $(RC_{1\_to\_N})_{k=1\_to\_Q}$ different N-tuples of device-dependent colour coordinates are generated one after one. The device-dependent colour coordinates k+1 are generated only, if the device-dependent colour coordinates k are completely processed. Complete processing includes all the steps described hereafter, including the calculation of $\Sigma\Delta_k$. A sample step direction dk is determined from the precedent sample direction d(k-1) in the reference colour space. If $\Sigma\Delta_k < \Sigma\Delta_{k-1}$, the direction dk equals d(k-1) or is derived by modifying slightly d(k-1), else, dk is derived from d(k-1) in a way that dk is orthogonal or even opposed to d(k-1). Then, from the given $(k)^{th}$ N-tuple of device-dependent colour coordinates $(RC_{1\_to\_N})_k$, the $(k+1)^{th}$ N-tuple of device-dependent colour coordinates $(RC_{1\_to\_N})_{k+1}$ is obtained by varying the $(k)^{th}$ N-tuple of device-dependent colour coordinates $(RC_{1\_to\_N})_{(k)}$ into the sample step direction. Now the processing described hereafter is done including the calculation of $\Sigma\Delta_{k+1}$.

From each N-tuple of device-dependent colour coordinates $(RC_{1\_to\_N})_k$, corresponding device independent colour coordinates $(X_{kj}, Y_{kj}, Z_{kj})_{1\_to\_N}$ are calculated for each observer $Ob_{j=1\_to\_M}$ in the same CIE-XYZ reference colour space.

More specifically, for each pixel of an image to reproduce, and for each N-tuple of device-dependent colour coordinates $(RC_{1\_to\_N})_{k=1\_to\_Q}$, the method comprises the following steps :

- for each actual observer $(Ob_{j=1\_to\_M})$ of said set, calculating in the CIE-XYZ reference colour space a triple of device-independent coordinates $(X_{kj},Y_{kj},Z_{kj})$ such that, if the spectral power distribution that is obtained by controlling the image reproduction device is $SPD_k$ when inputting said N-tuple of device-dependent colour coordinates $(RC_{1\_to\_N})_k$, and if $x_j(\lambda)$; $y_j(\lambda)$; $z_j(\lambda)$ is the triple of colour matching functions of this actual observer $(Ob_j)$,

$$X_{kj} = \sum_\lambda SPD_k x_j(\lambda)\Delta\lambda; \quad Y_{kj} = \sum_\lambda SPD_k y_j(\lambda)\Delta\lambda; \quad Z_{kj} = \sum_\lambda SPD_k z_j(\lambda)\Delta\lambda$$

- for each actual observer $(Ob_{j=1\_to\_M})$ of said set, calculating the difference between the calculated triple of device-independent colour coordinates $(X_{kj},Y_{kj},Z_{kj})$ for this actual observer and the triple of device-independent colour coordinates $(X_0,Y_0,Z_0)$ for the reference observer $(Ob_0)$, and
- calculating the sum $\Sigma\Delta_k$ of these differences over all actual observers $(Ob_{j=1\_to\_M})$ of said set.

Then, we have a set of Q values $\Sigma\Delta_k$ ; within this set of values, the minimum $(\Sigma\Delta)_{MIN}$ is determined, and the corresponding N-tuple of device-dependent colour coordinates $(RC_{1\_to\_N})_{OPT}$ is used to control the image reproduction device in order to reproduce the colour of the pixel.

For each pixel of the image to reproduce, the same optimization is performed, and the reproduction of the whole image is obtained.

Advantageously and contrary to the prior art method referenced above, the colours to reproduce do not need to be represented by a spectrum instead of trichromatic values. The invention allows to account for observer metamerism by displaying the colour in such a way that the colour differences are minimal for every observer of the reproduced colours.

While the present invention is described with respect to particular examples and preferred embodiments, it is understood that the present invention is not limited to these examples and embodiments. The present invention as claimed therefore includes variations from the particular examples and preferred embodiments described herein, as will be apparent to one of skill in the art. While some of the specific embodiments may be described and claimed separately, it is understood that the various features of embodiments described and claimed herein may be used in combination.

**Claims**

1. Method for reproduction of a colour image for a given set of M actual observers $(Ob_{j=1\_to\_M})$ by using a given set of N-primary colours $(PC_{i=1\text{-to-N}})$ of an image reproduction device, wherein N > 3, and by applying, for each pixel of said colour image, an optimum intensity $(RC_i)_{OPT}$ to each primary colour $PC_i$ of said set, the optimum intensities of the different N-primary colours $(PC_{i=1\text{-to-N}})$ forming an optimum N-tuple of device dependent colour coordinates $(RC_{1\_to\_N})_{OPT}$,

   where, whatever the Q different N-tuples of device dependent colour coordinates $(RC_{1\_to\_N})_{k=1\text{-to-Q}}$ that may be applied for the reproduction of the colour of any pixel of said image, said reproduction generating, for a given N-tuple $(RC_{1\_to\_N})_k$, a given perception $(T\text{-}Ob_j)_k$ of said reproduced colour for each observer $(Ob_{j=1\ to\ M})$ of said set,

   if the difference between the perception $(T\text{-}Ob_j)_k$ of said reproduced colour by a given observer $(Ob_j)$ of said set and the perception $(T\text{-}Ob_0)_k$ of the same reproduced colour by a reference observer $(Ob_0)$ is denoted $|(T\text{-}Ob_j)_k - (T\text{-}Ob_0)_k|$,

   if the sum of these differences over the whole set of observers $(Ob_{j=1\_to\_M})$ is denoted $\Sigma\Delta_k$, where $\Sigma\Delta_k = \Sigma_{j=1\ to\ M}\ |(T\text{-}Ob_j)_k - (T\text{-}Ob_0)_k|$,

   said optimum N-tuple of device dependent colour coordinates $(RC_{1\_to\_N})_{OPT}$ is chosen such that the corresponding sum $\Sigma\Delta_{OPT}$ of these differences is the minimum sum over all sums of these differences $\Sigma\Delta_{k=1\ to\ Q}$.

2. Method according to claim 1, **characterized in that** Q > 100.

3. Method according to claim 2, **characterized in that** Q > 10000.

4. Method for reproduction of a colour image according to anyone of the preceding claims, wherein the colour of each pixel of said image is described by a first triple of device-independent coordinates $(X_0, Y_0, Z_0)$ in a reference colour space for a reference observer $(Ob_0)$ who is visually **characterized by** a reference triple of colour matching functions $x_0(\lambda)$; $y_0(\lambda)$; $z_0(\lambda)$, wherein each actual observer $(Ob_{j=1\_to\_M})$ of said given set is visually **characterized by** a triple of colour matching functions $x_j(\lambda)$; $y_j(\lambda)$; $z_j(\lambda)$, where, for each pixel of said image:

   - the Q different N-tuples of device-dependent colour coordinates $(RC_{1\_to\_N})_{k=1\_to\_Q}$ are determined to be adapted to reproduce the colour of said pixel as defined by its first triple of device-independent coordinates $(X_0, Y_0, Z_0)$;
   - for each N-tuple of device-dependent colour coordinates $(RC_{1\_to\_N})_{k=1\_to\_Q}$:
   - for each actual observer $(Ob_{j=1\_to\_M})$ of said set, a triple of device-independent coordinates $(X_{kj}, Y_{kj}, Z_{kj})$ is calculated in said reference color space such that, if $SPD_k$ is the spectral power distribution that is obtained by applying the device-dependent colour coordinates of said N-tuple of $(RC_{1\_to\_N})_k$ to each corresponding primary colour $(PC_{i=1\text{-to-N}})$, and if $x_j(\lambda)$; $y_j(\lambda)$; $z_j(\lambda)$ is the triple of colour matching functions of said actual observer $(Ob_j)$:

$$X_{kj} = \sum_{\lambda} SPD_k x_j(\lambda)\Delta\lambda; \quad Y_{kj} = \sum_{\lambda} SPD_k y_j(\lambda)\Delta\lambda; \quad Z_{kj} = \sum_{\lambda} SPD_k z_j(\lambda)\Delta\lambda$$

   - for each actual observer $(Ob_{j=1\_to\_M})$ of said set, the difference between the calculated triple of device-independent colour coordinates $(X_{kj}, Y_{kj}, Z_{kj})$ for this actual observer and said first triple of device-independent colour

coordinates $(X_0, Y_0, Z_0)$ for the reference observer $(Ob_0)$ is calculated, and
- the sum $\Sigma\Delta_k$ of these differences over all actual observers $(Ob_{j=1\_to\_M})$ of said set is calculated;
- said optimum N-tuple of device dependent colour coordinates $(RC_{1\_to\_N})_{OPT}$ is then chosen such that the corresponding sum $\Sigma\Delta_{OPT}$ of these differences is the minimum sum over all sums of differences $\Sigma\Delta_{k=1\ to\ Q}$.

1964 10° Standard Observer

Fig.1

Fig.2

Europäisches
Patentamt

European
Patent Office

Office européen
des brevets

# EUROPEAN SEARCH REPORT

Application Number

EP 10 30 6526

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | KÖNIG F ET AL: "Multiprimary display: discounting observer metamerism", PROCEEDINGS OF SPIE, SPIE, USA, vol. 4421, 9 October 2003 (2003-10-09), pages 898-901, XP002594655, ISSN: 0277-786X * Chapter 2 * | 1-4 | INV. H04N9/64 |
| X | WO 2007/118637 A2 (CADDON COMPUTERSYSTEM VERTRIEB [DE]; HILL BERNHARD [DE]; BOOSMANN THOM) 25 October 2007 (2007-10-25) * page 17, line 11 - line 28 * | 1-4 | |
| A | EP 2 134 089 A1 (THOMSON LICENSING [FR]) 16 December 2009 (2009-12-16) * paragraph [0044] - paragraph [0045] * | 1-4 | |

TECHNICAL FIELDS
SEARCHED (IPC)

H04N

The present search report has been drawn up for all claims

| Place of search | Date of completion of the search | Examiner |
|---|---|---|
| Munich | 7 June 2011 | Montanari, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 10 30 6526

This annex lists the patent family members relating to the patent documents cited in the above-mentioned European search report.
The members are as contained in the European Patent Office EDP file on
The European Patent Office is in no way liable for these particulars which are merely given for the purpose of information.

07-06-2011

| Patent document cited in search report | | Publication date | Patent family member(s) | | Publication date |
|---|---|---|---|---|---|
| WO 2007118637 | A2 | 25-10-2007 | DE 102006018218 A1<br>EP 2011110 A2 | | 29-11-2007<br>07-01-2009 |
| EP 2134089 | A1 | 16-12-2009 | WO 2009150088 A1 | | 17-12-2009 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1450302 A
- US 6648475 B
- WO 0195544 A
- US 6256073 B
- US 6191826 B
- US 6147720 A

**Non-patent literature cited in the description**

- **BERNHARD HILL.** Aspects of total multispectral image reproduction systems. Department of Electrical Engineering and Information Technology
- **MASAHIRO YAMAGUCHI et al.** Colour Imaging: Device Independent Colour, Colour Hardcopy and Applications VII. *Proc. SPIE,* 2002, vol. 4663, 15-26
- **MURAKAMI.** Colour conversion method for multi-primary display for spectral colour reproduction. *Journal of Electronic Imaging,* October 2004, vol. 13 (4), 701-708
- **FRIEDHELM KÖNIG et al.** disclosed during the 9th Congress of the International Colour Association. *Proceedings of SPIE,* 2002, vol. 4421